# FASCICULE DE BREVET EUROPEEN

(11) **EP 3 297 867 B1**
(45) Date de publication et mention de la délivrance du brevet: **12.12.2018**
(21) Numéro de dépôt: 16726817.6
(22) Date de dépôt: 19.05.2016
(51) Int. Cl.: B60K 15/03

(54) **RESERVOIR A JUPE INTEGREE**
TANK MIT INTEGRIERTER SCHÜRZE
TANK WITH INTEGRATED SKIRT

(30) Priorité: 19.05.2015 FR 1554448
(43) Date de publication de la demande: 28.03.2018
(73) Titulaire: Plastic Omnium Advanced Innovation and Research, 1120 Bruxelles (BE)
(72) Inventeur: LECLEC'H, Nicolas, 60280 Margny les Compiègne (FR); GUILLERME, Hervé, 60310 Thiescourt (FR); GUIGNERY, Frédéric, 95540 Mery-sur-Oise (FR)
(74) Mandataire: LLR
(86) Numéro de dépôt international: PCT/EP2016/061340
(87) Numéro de publication internationale: WO 2016/184990

(56) Documents cités:
- EP-A2- 1 745 971
- US-A1- 2006 011 173
- US-A1- 2010 032 436
- US-B1- 6 182 693
- US-B1- 6 274 209

## Description

L'invention concerne le domaine des réservoirs destinés au stockage des liquides et plus précisément celui des réservoirs à carburant ou d'urée pour véhicule automobile.

Un réservoir à carburant comprend généralement une enveloppe comprenant une ou plusieurs parois délimitant le réservoir. Il comprend également au moins un composant permettant de relier en communication de fluide l'intérieur et l'extérieur du réservoir. Par exemple, le réservoir comprend de façon quasiment systématique un orifice de remplissage en carburant. De plus, lorsque le réservoir est, au moins partiellement, rempli de carburant, des vapeurs de carburant s'accumulent dans le réservoir. Il est donc nécessaire d'évacuer ces vapeurs. Pour ce faire, on dispose au moins une soupape de ventilation sur une paroi du réservoir. Lorsque la pression en vapeurs de carburant devient supérieure à un seuil prédéterminé, la soupape met en communication de fluide le réservoir et un circuit de ventilation du réservoir.

Habituellement, le composant est formé d'un seul tenant. Une première partie s'étend à l'intérieur du réservoir. Une seconde partie s'étend en dehors du réservoir et est reliée à un organe extérieur au réservoir. Cette seconde partie est destinée à être reliée à un organe adapté disposé à l'extérieur du réservoir. La première partie est destinée, en fonction de ses dimensions, à laisser passer les vapeurs de carburant lorsque le niveau de celui-ci est élevé dans le réservoir.

Chaque composant doit donc être spécifiquement dimensionné selon la fonction qu'il est destiné à remplir.

Il est connu des demandes de brevet EP 1 745 971 A2 et US 2006 011 173 A1, des réservoirs comportant un composant comprenant deux organes distincts, l'un relié avec une paroi du réservoir et l'autre fixé à la face extérieure de la paroi du réservoir. Le composant comprend également un orifice par lequel peut passer un fluide.

Un but de l'invention est de proposer un réservoir plus simple à fabriquer.

Pour ce faire, on prévoit, selon l'invention, un réservoir pour le stockage d'un liquide, selon la revendication 1, comportant au moins un composant incluant au moins un port mettant en communication de fluide l'intérieur et l'extérieur du réservoir, caractérisé en ce que le composant comprend deux organes distincts, à savoir un premier organe venu de matière avec une paroi du réservoir et un second organe fixé à une face extérieure de la paroi du réservoir.

Ainsi, lors de la fabrication du réservoir, on dimensionne le premier organe en fonction du rôle que celui-ci devra remplir. Le second organe, assurant la communication fluidique entre l'intérieur et l'extérieur du réservoir et étant relié à au moins un autre organe extérieur au réservoir, peut alors être produit séparément de façon standard puis être fixé sur la paroi du réservoir. Le réservoir est ainsi plus simple à fabriquer.

Selon l'invention, le second organe est fixé de façon étanche à la face extérieure de la paroi du réservoir.

Selon un mode de réalisation, le composant est une soupape de ventilation du réservoir.

Selon l'invention, le premier organe est conformé en jupe.

Cette forme est facile à obtenir, notamment dans un réservoir injecté, et permet de réaliser de façon simple une soupape de ventilation adaptée aux dimensions du réservoir.

Selon l'invention, la jupe a une dimension transversale supérieure à la plus grande dimension d'une ouverture de la paroi du réservoir autour de laquelle la jupe est positionnée.

Dans l'état de la technique, lorsque la jupe était venue de matière avec le premier organe, elle présentait nécessairement une dimension transversale inférieure ou égale au diamètre de l'ouverture de manière à pouvoir passer à travers cette ouverture lors de la mise en place du composant sur le réservoir. Désormais, la jupe peut avoir une dimension transversale plus importante puisqu'il n'est plus nécessaire de l'introduire dans le réservoir à travers l'ouverture. Ainsi, on peut la loger dans une partie du réservoir dont une dimension entre deux parois est plus petite. Il est donc possible de positionner le composant à des endroits du réservoir auparavant inaccessibles.

Selon un mode de réalisation, la jupe s'étend à l'intérieur du réservoir.

Avantageusement, le second organe est fixé par vissage.

De préférence, le second organe est fixé par soudage.

Selon un mode de réalisation, le second organe est fixé par surmoulage.

Avantageusement, le réservoir comprend des parois en matière plastique formées par injection.

De préférence, le réservoir est destiné à être utilisé pour le stockage de carburant d'un véhicule automobile.

On va maintenant décrire, à titre d'exemple non limitatif, un mode de réalisation de l'invention à l'aide des figures suivantes :
- la figure 1 est une vue en perspective et en coupe d'un réservoir selon l'invention,
- la figure 2 est une vue en perspective éclatée du réservoir,
- la figure 3 est une vue en perspective et en coupe selon un autre angle du réservoir, et
- les figures 4 et 5 sont des vues en perspective selon deux angles différents d'un composant selon l'invention.

La figure 6 est une vue en perspective d'une partie d'une paroi du réservoir,

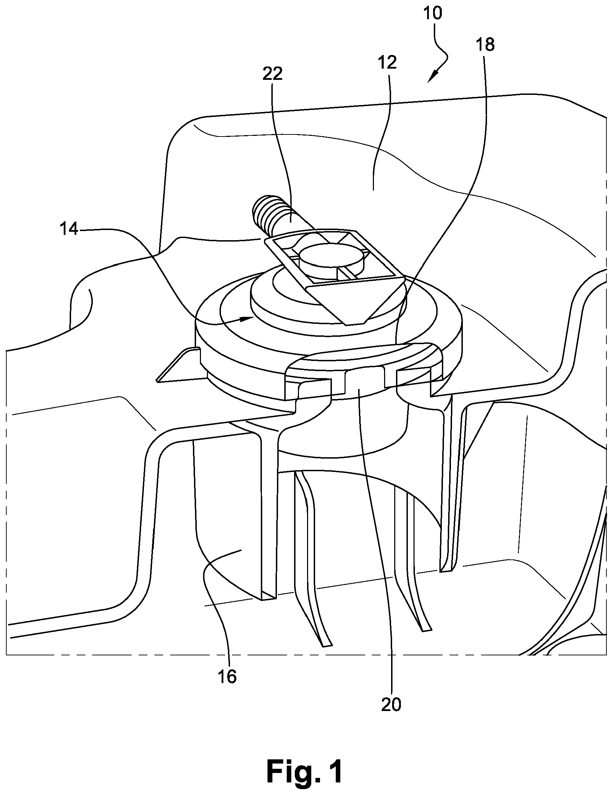

On a représenté sur la figure 1 un réservoir 10 pour le stockage d'un liquide selon l'invention. Ici, il s'agit d'un réservoir 10 destiné à être utilisé pour le stockage de carburant d'un véhicule automobile. Le carburant qu'il contient est donc destiné à être utilisé pour alimenter le moteur du véhicule. Le réservoir 10 est relié d'une part au moteur et d'autre part à des moyens de remplissage en carburant du réservoir.

Le réservoir 10 comprend une paroi 12 en une matière plastique, par exemple de type polyéthylène haute densité (PEHD). Ici, les parois du réservoir ont été formées par injection.

Le réservoir 10 comprend également un composant 14, qui est ici une soupape de ventilation du réservoir 10. Selon une variante, le composant 14 est un dispositif de remplissage du réservoir 10. Lorsque la pression en vapeur de carburant devient supérieure à un seuil prédéterminé dans le réservoir 10, la soupape met en communication de fluide l'intérieur et l'extérieur du réservoir 10. Ici, la soupape met en communication de fluide l'intérieur du réservoir 10 avec un système destiné à traiter les vapeurs de carburant.

Le composant 14 comprend deux organes distincts : un premier organe 16 et un second organe 18.

Le premier organe 16 est venu de matière avec la paroi 12 du réservoir 10. Il est ici conformé de façon à former une jupe s'étendant à l'intérieur du réservoir 10. Avantageusement, la longueur de la jupe est fixée en fonction d'un niveau de liquide maximum autorisé dans le réservoir.

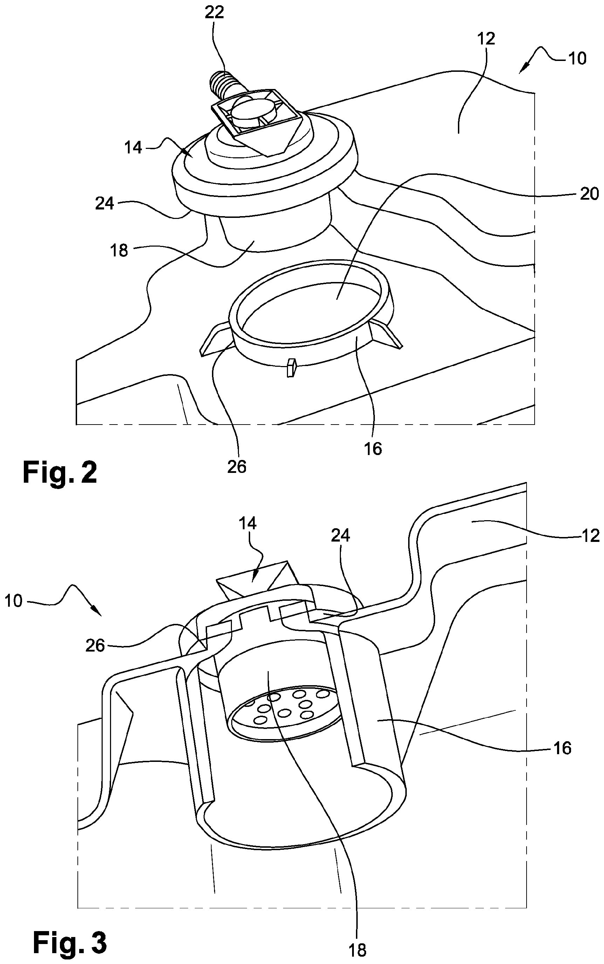

Le premier organe 16 conformé en jupe est positionné autour d'une ouverture 20 circulaire de la paroi 12 du réservoir 10. Comme on le voit sur les figures 1 et 3, la jupe présente une dimension transversale supérieure à une dimension, ici le diamètre, de l'ouverture 20 de la paroi 12 du réservoir 10.

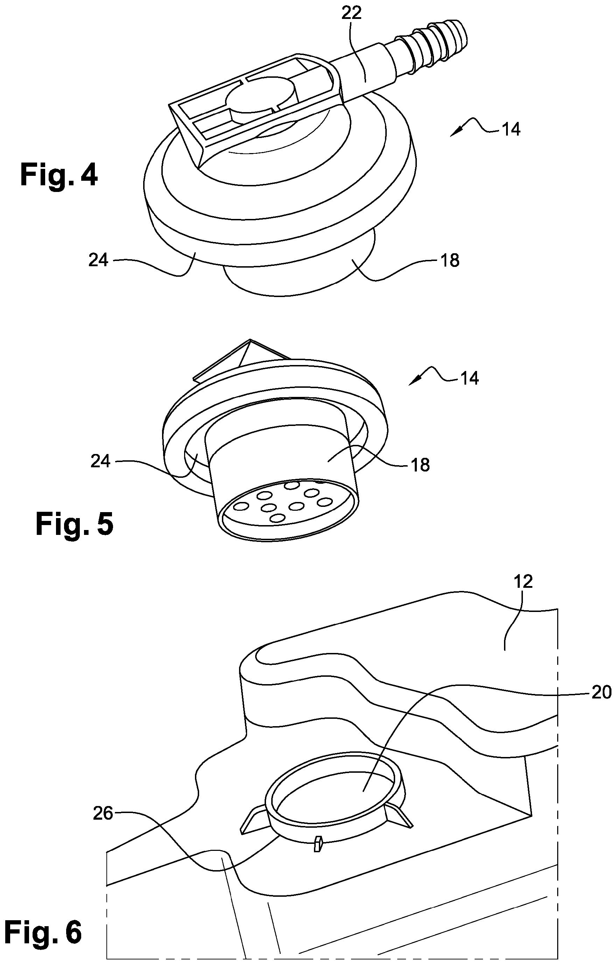

En outre, le composant 14 comporte un port 22, visible aux figures 1 à 5, situé à l'extérieur du réservoir, apte à mettre en communication de fluide l'intérieur et l'extérieur du réservoir. Le second organe 18 est ici venu de matière avec le port 22.

Le second organe 18 est fixé de façon étanche à la face extérieure de la paroi 12 du réservoir par soudage. Pour ce faire, le second organe 18 comprend une zone de soudure 24, visible aux figures 2 à 5, circulaire en regard d'une zone de soudure 26, visible aux figures 2, 3 et 6, également circulaire d'une face extérieure du premier organe 16. Les zones de soudure des premier 16 et second 18 organes sont de formes complémentaires. Ici, on a procédé à une soudure par miroir chauffant. Selon une variante du présent mode de réalisation, on peut procéder à tous types de soudage, notamment par ultrasons ou par laser.

Selon d'autres variantes de ce mode de réalisation, le second organe 18 est fixé de façon étanche à la face extérieure par vissage ou, selon une autre variante, par surmoulage.

Ainsi, le principal avantage de l'invention porte sur la simplicité de la fabrication du réservoir 10. En effet, lors de la formation du réservoir 10 par injection, on conforme les parois 12 du réservoir 10 en disposant autant de jupes que nécessaire, venues de matière avec les parois 12 du réservoir 10. Les dimensions de chaque jupe sont adaptées à la fonction que le composant 14 qui incorpore cette jupe respective devra remplir. Ensuite, on dispose le second organe, standardisé, autour de chaque ouverture 20 autour de laquelle une jupe est disposée, de façon étanche.

Dans un mode de réalisation particulier, le second organe 18 comprend une membrane de séparation liquide/vapeur.

Bien entendu, on pourra apporter à l'invention de nombreuses modifications sans sortir du cadre de celle-ci.

Moyennant des précautions particulières et si la matière constituant la paroi du réservoir le permet, on peut envisager d'obtenir la jupe par déformation d'une paraison chaude lors de son soufflage et de sa mise en forme, ou encore par soudure d'une pièce cylindrique à la paraison chaude pendant sa mise en forme.

On pourra utiliser différentes techniques pour fabriquer les parois 12 du réservoir 10.

On pourra également modifier la forme du premier organe 16.

## Revendications

1. Réservoir (10) pour le stockage d'un liquide d'un véhicule automobile, comportant au moins un composant (14) incluant au moins un port (22) mettant en communication de fluide l'intérieur et l'extérieur du réservoir (10), le composant (14) comprenant deux organes distincts, à savoir un premier organe (16) venu de matière avec une paroi (12) du réservoir (10) et un second organe (18) fixé de façon étanche à une face extérieure de la paroi (12) du réservoir (10), le premier organe (16) étant conformé en jupe, **caractérisé en ce que** la jupe a une dimension transversale supérieure à la plus grande dimension d'une ouverture de la paroi (12) du réservoir (10) autour de laquelle la jupe est positionnée.

2. Réservoir (10) selon la revendication 1, dans lequel le composant (14) est une soupape de ventilation du réservoir (10).

3. Réservoir (10) selon l'une quelconque des revendications précédentes, dans lequel la jupe s'étend à l'intérieur du réservoir (10).

4. Réservoir (10) selon l'une quelconque des revendications précédentes, dans lequel le second organe (18) est fixé par vissage.

5. Réservoir (10) selon l'une quelconque des revendications précédentes, dans lequel le second organe (18) est fixé par soudage.

6. Réservoir (10) selon l'une quelconque des revendications précédentes, dans lequel le second organe (18) est fixé par surmoulage.

7. Réservoir (10) selon l'une quelconque des revendications précédentes, comprenant des parois (12) en matière plastique formées par injection.

8. Réservoir (10) selon l'une quelconque des revendications précédentes, destiné à être utilisé pour le stockage de carburant ou d'urée d'un véhicule automobile.

## Patentansprüche

1. Tank (10) zur Lagerung einer Flüssigkeit eines Kraftfahrzeugs, der mindestens ein Bauteil (14) umfasst, das mindestens einen Anschluss (22) aufweist, der die Flüssigkeit innerhalb und außerhalb des Tanks (10) in Verbindung bringt, wobei das Bauteil (14) zwei verschiedene Elemente umfasst, nämlich ein erstes Element (16), das einstückig mit einer Wand (12) des Tanks (10) ausgebildet ist, und ein zweites Element (18), das in dicht abschließender Weise an einer Außenfläche der Wand (12) des Tanks (10) befestigt ist, wobei das erste Element (16) als Mantel ausgebildet ist, **dadurch gekennzeichnet, dass** die Mantel eine Querabmessung aufweist, die größer als die größere Abmessung einer Öffnung der Wand (12) des Tanks (10) ist, um die die Mantel positioniert ist.

2. Tank (10) nach Anspruch 1, wobei das Bauteil (14) ein Belüftungsventil des Tanks (10) ist.

3. Tank (10) nach einem der vorhergehenden Ansprüche, wobei die Mantel sich in das Innere des Tanks (10) erstreckt.

4. Tank (10) nach einem der vorhergehenden Ansprüche, wobei das zweite Element (18) durch Verschrauben befestigt ist.

5. Tank (10) nach einem der vorhergehenden Ansprüche, wobei das zweite Element (18) durch Verschweißen befestigt ist.

6. Tank (10) nach einem der vorhergehenden Ansprüche, wobei das zweite Element (18) durch Umspritzen befestigt ist.

7. Tank (10) nach einem der vorhergehenden Ansprüche, der Wände (12) aus Kunststoffmaterial umfasst, die durch Spritzen gebildet sind.

8. Tank (10) nach einem der vorhergehenden Ansprüche, der dazu bestimmt ist, für die Aufbewahrung des Kraftstoffs oder Harnstoffs eines Kraftfahrzeugs verwendet zu werden.

## Claims

1. A tank (10) for storing a liquid of a motor vehicle, comprising at least one component (14) including at least one port (22) bringing the inside and the outside of the tank (10) into fluid communication, the component (14) comprising two separate members, namely a first member (16) integrally formed with a wall (12) of the tank (10) and a second member (18) fixed in a sealed manner to an outer face of the wall (12) of the tank (10), the first member (16) being configured as a skirt, **characterized in that** the skirt has a transverse dimension which is greater than the largest dimension of an opening of the wall (12) of the tank (10), around which opening the skirt is positioned.

2. The tank (10) as claimed in claim 1, in which the component (14) is a valve for venting the tank (10).

3. The tank (10) as claimed in either one of the preceding claims, in which the skirt extends inside the tank (10).

4. The tank (10) as claimed in either one of the preceding claims, in which the second member (18) is fixed by screwing.

5. The tank (10) as claimed in any one of the preceding claims, in which the second member (18) is fixed by welding.

6. The tank (10) as claimed in any one of the preceding claims, in which the second member (18) is fixed by overmolding.

7. The tank (10) as claimed in any one of the preceding claims, comprising walls (12) of plastic which are formed by injection-molding.

8. The tank (10) as claimed in any one of the preceding claims, intended to be used for storing fuel or urea of a motor vehicle.
